Europäisches Patentamt

European Patent Office

Office européen des brevets

Numéro de publication: **0 354 089**
A1

# DEMANDE DE BREVET EUROPEEN

Numéro de dépôt: **89402065.0**

Date de dépôt: **20.07.89**

Int. Cl.⁵: **F 16 L 51/04**
**B 60 K 15/01**

Priorité: **29.07.88 FR 8810308**

Date de publication de la demande:
**07.02.90 Bulletin 90/06**

Etats contractants désignés:
**AT BE CH DE ES FR GB GR IT LI LU NL SE**

Demandeur: **ATOCHEM**
**4 & 8, Cours Michelet La Défense 10**
**F-92800 Puteaux (FR)**

Inventeur: **Malcoeffe, Michel**
**5bis rue du Viaduc**
**F-94130 Nogent sur Marne (FR)**

**Tube utilisable pour le transport de fluides, susceptibles de faire varier son volume et notamment sa longueur.**

La présente invention a pour objet un tube en matière plastique pour le transport de fluides, susceptibles de faire varier son volume, notamment sa longueur.

Le tube conforme à l'invention est tel qu'il présente au moins une portion qui peut absorber élastiquement une déformation macroscopique.

L'invention concerne également l'utilisation d'un tel tube fixé en extension notamment comme conduit d'essence.

Fig 1

Bundesdruckerei Berlin

EP 0 354 089 A1

Description

# TUBE UTILISABLE POUR LE TRANSPORT DE FLUIDES, SUSCEPTIBLES DE FAIRE VARIER SON VOLUME ET NOTAMMENT SA LONGUEUR

La présente invention concerne un tube utilisable pour le transport de fluides, susceptibles, par leur passage, de faire varier réversiblement et macroscopiquement son volume, et notamment sa longueur.

Il est connu que les essences ordinaire et super provoquent le gonflement d'objets à base de polyamide-11 (PA-11), polyamide-12 (PA-12) mais aussi à base de polyamide-6 (PA-6), de polybutylène téréphtalate, de polyacétal... .

Dans le cas du PA-11 et du PA-12, divers agents chimiques provoquent leur gonflement ; on peut citer, à titre d'exemples, les hydrocarbures aromatiques tels que benzène, toluène, xylène, styrène, la diéthanolamine à une concentration de 20 %, l'acétone pure, le furfurol, les alcools méthylique, éthylique, butylique, la glycérine. Le gonflement constaté est réversible ; il convient toutefois de noter que cette réversibilité est plus ou moins rapide selon la tension de vapeur du fluide considéré.

Sur les véhicules à moteur, on constate que les conduits, notamment à base de polyamide, assurant le transport de l'essence du réservoir vers le carburateur se dilatent et en particulier s'allongent notablement sous l'effet de l'essence additivée d'alcool(s) de sorte que l'allongement du conduit peut atteindre environ 5 % de sa longueur initiale. Un tel allongement est particulièrement néfaste car le conduit n'est plus solidaire du plancher mais "pend" sous le plancher sous l'effet de la pesanteur, ce qui multiplie les risques d'arrachement lorsque le véhicule emprunte des terrains accidentés (nids de poule, ornières, ralentisseurs...). Pour pallier cet inconvénient, il est possible d'augmenter le nombre des points d'attache du conduit sous le plancher afin de limiter l'amplitude de l'écartement du tube par rapport à sa position initiale tout contre le plancher. Cette solution augmente la durée d'installation du conduit sur le véhicule entraînant également un surcoût dû aux attaches supplémentaires nécessaires.

La solution mise au point par la demanderesse consiste à utiliser un tube de configuration géométrique telle qu'il puisse absorber élastiquement une déformation macroscopique engendrée par une contrainte physique et/ou mécanique externe, permanente ou non. Le tube selon l'invention, utilisé pour le transport de fluides, susceptibles notamment de faire varier réversiblement et macroscopiquement son volume et notamment sa longueur est caractérisé en ce qu'au moins une portion dudit tube peut absorber élastiquement une déformation telle que définie plus haut.

La demanderesse s'est particulièrement intéressée à un tube tel que décrit ci-dessus dont en outre, au moins un segment comprenant au moins une portion susceptible d'absorber élastiquement une déformation telle que définie plus haut est approximativement inscrit dans un plan, que ledit segment soit déformé ou non.

Les tubes selon l'invention peuvent être de simples tubes à parois lisses.

La ou les portions pouvant absorber élastiquement une déformation telle que définie plus haut peut avoir la forme d'une ou plusieurs lyres ou oméga majuscule, d'une ou plusieurs spires.

Les tubes selon l'invention peuvent aussi être au moins partiellement annelés et en particulier la ou les portions pouvant absorber élastiquement une déformation telle que définie plus haut peut être annelée.

Les tubes ou portions de tube annelés peuvent notamment être tels que ceux décrits dans la description et les dessins du brevet FR 2 427 538 au nom de THOMSON-BRANDT.

Parmi les différentes matières plastiques susceptibles d'être utilisées pour la réalisation de tubes conformes à l'invention, on préfère les thermoplastiques et/ou les élastomères thermoplastiques.

La mise en forme des matériaux thermoplastiques, élastomères ou non, est aisée : un simple traitement thermique permet à un tube rectiligne obtenu par exemple par extrusion, d'acquérir une configuration géométrique plus complexe et permanente.

Parmi les traitements thermiques habituellement rencontrés, appliqués aux matériaux thermoplastiques, on peut citer le cintrage ou formage d'un tube rectiligne à une température suffisante pour qu'il n'ait pas tendance, de par sa "mémoire plastique" à revenir à sa position rectiligne.

Le chauffage du tube, lors de l'opération de cintrage ou formage peut avoir lieu en étuve, à la vapeur d'eau, à l'huile, au sable, par circulation d'air chaud, etc...

Pour réaliser un tube au moins partiellement annelé, on peut utiliser la technique du formage à chaud appliquée à un tube à parois lisses.

Les matériaux constitutifs d'un tube selon l'invention peuvent être indifféremment choisis parmi les différentes familles de polymères thermoplastiques. A titre d'exemple de polymère thermoplastique, on peut citer le polystyrène, le polychlorure de vinyle, les polycarbonates, les polyamides, les résines acryliques.

Parmi les matériaux thermoplastiques, ceux à base de polyamide sont plus particulièrement préférés.

Par polyamides, on entend les polymères résultant de la polycondensation d'un ou plusieurs aminoacides tels que les acides aminocaproïque, amino 7-heptanoïque, amino-11 undécanoïque, amino 12-dodécanoïque, etc...

d'un ou plusieurs lactames tels que le caprolactame, l'oenantholactame, le dodécalactame, l'undécalactame, etc...

d'un ou plusieurs sels ou mélanges de diamines telle que l'hexaméthylène-diamine, la dodécaméthylènediamine, la métaxylènediamine, le bis-p aminocyclohexylméthane, la triméthylhexaméthylène diamine, etc...

avec des diacides tels les acides isophtalique, téréphtalique, adipique, azélaïque, subérique, sébacique, dodécanedioïque, etc...
ou des mélanges de tous ces monomères ce qui conduit à des copolyamides.

Parmi ces polyamides, on citera tout particulièrement :
- le polyamide-11, obtenu par polycondensation de l'acide amino 11-undécanoïque,
- le polyamide-12, obtenu par polycondensation de l'acide amino 12-dodécanoïque ou du dodécalactame,
- le polyamide-12,12, obtenu par copolycondensation de dodécaméthylènediamine et d'acide dodécanedioïque,
- les copolyamides obtenus par polymérisation des monomères cités ci-dessus.

Les matériaux constitutifs d'un tube selon l'invention peuvent également être indifféremment choisis parmi les différentes familles d'élastomères thermoplastiques (TPE).

On distingue, en général, parmi les élastomères thermoplastiques ;
- les mélanges de polymères souvent réalisés à partir de polyoléfines, appelés dans ce cas élastomères thermoplastiques oléfiniques (TPO). A titre d'exemple, on peut citer les mélanges à base de polypropylène et de copolymère d'éthylène, de propylène et de diène tel que l'isoprène ou le 1,3 butadiène (EPDM).
- les copolymères blocs qui présentent une répartition séquentielle de motifs constitutifs de blocs rigides et de blocs souples :

1) Les copolymères blocs à base de polystyrène c'est-à-dire ceux dont la phase rigide est constituée de séquences polystyrène, la phase souple pouvant être formée de séquences polybutadiène, polyisoprène, poly(éthylène-butylène).

2) Les copolymères blocs à base de polyuréthanne qui peuvent être obtenus par réaction conjointe d'un diol de haut poids moléculaire qui constitue la séquence souple, sur un diisocyanate et un diol de bas poids moléculaire qui engendrent la séquence rigide.

3) Les copolymères blocs à base de polyester, dont la séquence rigide est un polyester tel que, par exemple du polybutylène ou du polyéthylènetéréphtalate, lesdites séquences rigides étant copolymérisées avec des séquences souples, constituées par exemple d'un glycol de bas poids moléculaire associé à un poly(alkylène éther) glycol.

4) Les copolymères blocs à base de polyamide pour les séquences rigides et de séquences souples polyéther, appelés aussi polyétheramides. Ces polyétheramides séquencés peuvent notamment résulter de la copolycondensation de séquences polyamides à extrémités réactives avec des séquences polyéthers à extrémités réactives, telles que, entre autres :

a) Séquences polyamides à bouts de chaînes diamines avec des séquences polyoxyalkylènes à bouts de chaînes dicarboxyliques.

b) Séquences polyamides à bouts de chaînes dicarboxyliques avec des séquences polyoxyalkylènes à bouts de chaînes diamines obtenues par cyanoéthylation et hydrogénation de séquences polyoxyalkylènes alpha-oméga dihydroxylées aliphatique appelées polyétherdiols.

c) Séquences polyamides à bouts de chaînes dicarboxyliques avec des polyétherdiols, les polyétheramides obtenus étant, dans ce cas particulier, des polyétheresteramides, particulièrement préférés par la demanderesse.

La composition et la fabrication de tels polyétheresteramides ont été décrites dans les brevets français n° 74.18913 et 77.26678 au nom de la demanderesse et dont le contenu s'ajoute à la présente description.

En sus de polymères thermoplastiques et/ou élastomères thermoplastiques (seuls, en mélange, ou copolymérisés), le matériau constituant le tube selon l'invention peut contenir différents additifs tels que plastifiants, stabilisants à la chaleur, à la lumière, charges telles que fibres de verre, de carbone, pigments, etc...

La présente invention a également pour objet l'utilisation d'un tube tel que précédemment décrit pour le transport de fluides susceptibles ou non de faire varier son volume, notamment sa longueur, de façon réversible et macroscopique (par exemple par une action physico-chimique et/ou thermique).

La solution proposée par la demanderesse consiste à fixer le tube en extension par rapport à la configuration géométrique qu'il possède à vide, s'il est plus particulièrement destiné à recevoir des fluides qui le font se dilater ou gonfler, et en particulier s'allonger, mais aussi s'il est plus particulièrement destiné à recevoir des fluides qui le font se contracter.

La fixation du tube quels que soient la nature des fluides transportés et leurs effets sur le volume, et notamment la longueur du tube, a pour conséquence que le déplacement spatial du tube sous l'effet des fluides "modificateurs" va consister en un retour de ce tube vers sa configuration géométrique à vide ou au-delà.

La fixation la plus avantageuse consiste à appliquer à un tube selon l'invention une contrainte de module tel qu'elle compense le plus exactement possible la variation volumique du tube dûe au fluide "modificateur" transporté.

Pour un tube selon l'invention fixé en extension, tube dont en outre au moins un segment comprend au moins une portion susceptible d'absorber élastiquement une déformation telle que définie précédemment, ledit segment étant approximativement inscrit dans un plan, la variation spatiale dudit segment se fera uniquement dans ce plan.

Un tel tube fixé en extension peut être avantageusement utilisé comme conduit d'essence : la partie sous le plancher qui comprend au moins un segment approximativement inscrit dans un plan reste proche et parallèle au plancher car sa variation spatiale dûe au fluide "modificateur" se fait parallèlement au plancher.

On n'a pas besoin de multiplier le nombre d'attaches dudit conduit en général réparties régulièrement le long du tube et distantes de 200 mm environ les unes des autres. Il faut seulement veiller à ce que les attaches se trouvant dans une partie du tube où se produit une déformation élastique ne gênent ni n'empêchent les mouvements du tube.

Comme attaches, on peut par exemple utiliser des agrafes libres, c'est-à-dire permettant le coulissement latéral du tube.

La ou les portions pouvant subir une déformation élastique peuvent éventuellement être solidaires de ressort(s) judicieusement placés et destinés à accélérer les variations longitudinales du tube sous l'effet des fluides transportés.

Afin d'illustrer la présente invention, on en a décrit ci-après quelques exemples de réalisation au moyen de dessins annexés qui représentent différentes configurations géométriques de tubes selon l'invention.

Les tubes à parois lisses représentés sur les Planches I à IV ci-jointes ont les dimensions suivantes :
- longueur : environ 2,5 m
- diamètre externe : 8 mm
- diamètre interne : 6 mm

Ils ont été réalisés avec les matériaux suivants :
. Echantillon i : polyamide-11, coloré en noir, stabilisé à la chaleur, dont le point de fusion est compris entre 183 et 187°C et contenant 6 % de plastifiant.
. Echantillon ii : polyamide-11 coloré en noir, stabilisé à la chaleur et à la lumière, dont le point de fusion s'échelonne entre 178 et 184°C et contenant 12 % de plastifiant.
. Echantillon iii : polyamide-12, coloré en noir, stabilisé à la chaleur et à la lumière dont le point de fusion s'échelonne entre 173 et 177°C et contenant 6 % de plastifiant.
. Echantillon iv : polyamide-12, coloré en noir, stabilisé à la chaleur et à la lumière, dont le point de fusion s'échelonne entre 168 et 174°C et contenant 12 % de plastifiant.

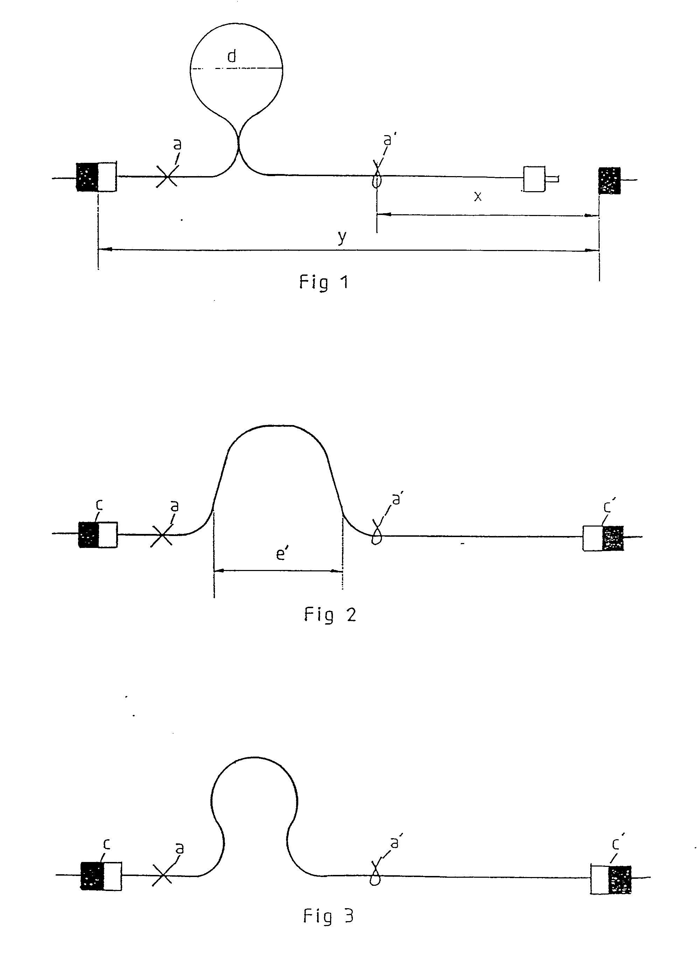

Pour les Echantillons i, ii, iii et iv, les trois configurations géométriques du tube conformes à l'invention représentées sur les Figures 1 des Planches I à III ont été obtenues par formage à l'étuve à 140-150°C.

La Figure 1 des Planches I à III représente un tube selon l'invention qui est approximativement inscrit dans un plan, en l'occurrence celui de la feuille.

La portion du tube pouvant absorber élastiquement une déformation macroscopique a la forme d'un oméga majuscule (ou d'une lyre) pour les Planches I et II.

Le diamètre moyen (d) de l'oméga est de 12 cm et ses 2 branches sont approximativement jointives.

Le tube des Planches I et II est muni de 2 agrafes (a et a') l'une (a) est fixe et serrée sur la partie rectiligne la plus courte du tube, l'autre (a') est libre et fixée à la distance (x) égale à 1,50 m de l'autre extrémité du tube.

La longueur totale des 2 parties rectilignes du tube est égale à environ 2 m.

Le tube représenté sur la Planche II est également muni d'un ressort de rappel (b) joignant les 2 branches de l'oméga.

Dans le cas du tube représenté à la Planche III la portion pouvant absorber une déformation élastique a la forme d'une boucle ou spire dont le diamètre (d) est sensiblement égal à 15 cm.

Le tube de la Planche III est muni de 2 agrafes (a et a') : l'une (a) est fixe et serrée sur la partie rectiligne du tube la plus courte, l'autre (a') est libre et fixée à la distance (x) égale à environ 1,50 m de l'autre extrémité du tube.

La longueur totale des 2 parties rectilignes du tube est égale à environ 2 m.

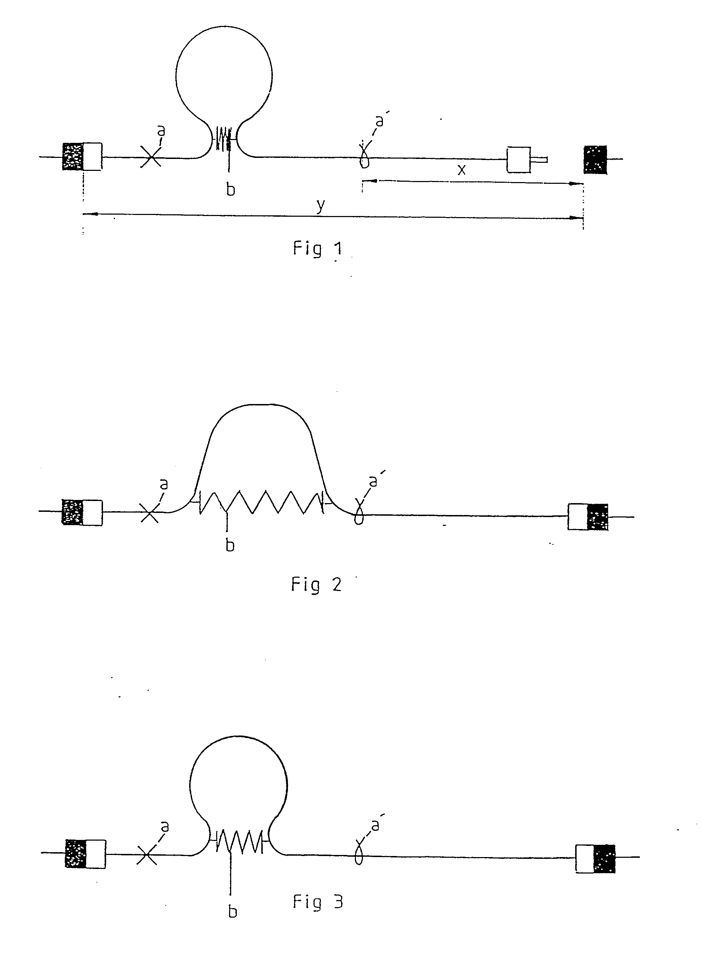

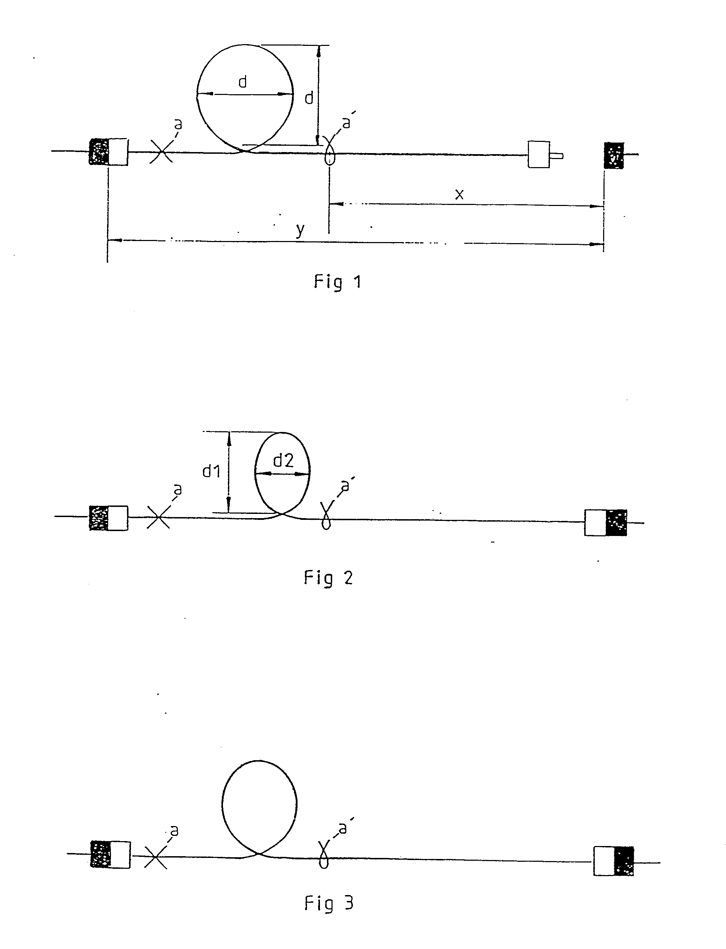

Les tubes selon l'invention représentés sur les Figures 1 des Planches I à III ont été fixés en extension à l'aide de 2 raccords (c et c') fixés à leurs extrémités (dans des conditions identiques pour chacun des tubes des Planches I à III) : avec un allongement correspondant à environ 4 % de la longueur initiale du tube (Figures 2 -Planches I à III). La demanderesse a utilisé des raccords standard à bague et des raccords rapides.

Outre les agrafes (a et a'), les tubes des Planches I à III sont munis d'agrafes régulièrement réparties et distantes les unes des autres d'environ 200 mm.

Ainsi pour le tube de la Planche I, fixé en extension (Figure 2), l'écartement (e') entre les 2 branches de l'oméga est d'environ 10 cm.

Pour le tube de la Planche III fixé en extension (Figure 2) la boucle ou spire prend une forme oblongue : sa longueur ($d_1$) est égale à environ 12 cm et sa largueur ($d_2$) à environ 10 cm.

On fait ensuite circuler de l'essence additivée de 15 % de méthanol à l'intérieur des tubes ainsi fixés.

La Figure 3 des Planches I à III correspond à la configuration géométrique que prend le tube sous l'effet de ce fluide. Pour les échantillons i, ii, iii, et iv, les résultats obtenus sont identiques.

**Revendications**

1. Tube en matière plastique pour le transport de fluides, susceptibles de faire varier réversiblement et macroscopiquement son volume, notamment sa longueur, caractérisé en ce qu'au moins une portion dudit tube peut absorber élastiquement une déformation macroscopique engendrée par une contrainte physique et/ou mécanique externe, permanente ou non.

2. Tube selon 1, caractérisé en ce qu'au moins un segment dudit tube est approximativement inscrit dans un plan et en ce que ledit segment comprend au moins un portion telle que définie dans la revendication 1.

3. Tube selon 1 ou 2, caractérisé en ce qu'une portion telle que définie en 1 ou 2 a la forme d'une ou plusieurs lyres ou oméga.

4. Tube selon 1 ou 2, caractérisé en ce qu'une portion telle que définie en 1 ou 2 a la forme d'une ou plusieurs spires.

5. Tube selon 1 ou 2, caractérisé en ce qu'une portion telle que définie en 1 ou 2 est annelée.

6. Tube selon l'une quelconque des revendications 1 à 5, caractérisé en ce qu'il est à base de matériaux thermoplastiques, de préférence à base de polyamide, de copolyamide ou de mélange à base de polyamide et avantageusement à base de PA-11 et/ou de PA-12 et/ou de PA-12,12.

7. Tube selon l'une quelconque des revendications 1 à 5, caractérisé en ce qu'il est à base d'élastomères thermoplastiques, de préférence de copolymère(s) bloc(s) à base de polyamide et/ou à base de polyester, et avantageusement à base de polyétheresteramide.

8. Tube selon 6 ou 7, caractérisé en ce qu'il est à base de mélanges et/ou de copolymères thermoplastiques et élastomères thermoplastiques.

9. Utilisation d'un tube selon l'une quelconque des revendications 1 à 8 pour le transport de fluides, caractérisée en ce que le tube est fixé en extension.

10. Utilisation d'un tube selon 7 comme conduit d'essence, et de préférence d'essence additivée d'un ou plusieurs alcools.

Fig 1

Fig 2

Fig 3

Fig 1

Fig 2

Fig 3

Fig 1

Fig 2

Fig 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 413 598  (SOCIETE-ELJIKA)<br>* Figures *<br>--- | 1-5 | F 16 L   51/04<br>B 60 K   15/01 |
| A | FR-A-1 409 885  (CITROEN)<br>* Figures 1-5 *<br>--- | 1-5 | |
| A | DE-A-2 125 575  (TECALEMIT SA)<br>* Revendications 1,2 *<br>----- | 6 | |

DOMAINES TECHNIQUES
RECHERCHES (Int. Cl.5)

F 16 L
B 60 K

**Le présent rapport a été établi pour toutes les revendications**

| Lieu de la recherche | Date d'achèvement de la recherche | Examinateur |
|---|---|---|
| LA HAYE | 06-11-1989 | BARTSCH A.W. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur. mais publié à la
    date de dépôt ou après cette :
D : cité dans la demande
L : cité pour d'autres raisons
..........................................................
& : membre de la même famille, document correspondant

EPO FORM 1503 03.82 (P0402)